# EUROPEAN PATENT APPLICATION

(11) **EP 3 674 848 A1**
(43) Date of publication of application: **01.07.2020**
(21) Application number: 18914924.8
(22) Date of filing: 12.11.2018
(51) Int. Cl.: G06F 3/01

(54) **OPTICAL SENSING APPARATUS AND TERMINAL**

(71) Applicant: SHENZHEN GOODIX TECHNOLOGY CO., LTD., Futian Free Trade Zone, Futian Shenzhen Guangdong 518000 (CN)
(72) Inventor: WANG, Yudong, Shenzhen, Guangdong 518045 (CN)
(74) Representative: Vinsome, Rex Martin
(86) International application number: PCT/CN2018/114940
(87) International publication number: WO 2020/097748

(57) **Abstract**

Some embodiments of the present disclosure provide an optical sensing device and a terminal. The optical sensing device in the present disclosure includes: a photoelectric sensor (105), configured to convert an optical signal obtained by a photosensitive unit of the photoelectric sensor into an electrical signal; and an image sensor (103), configured to convert an optical signal obtained by a photosensitive unit of the image sensor into image data. The image sensor and the photoelectric sensor are physically integrated, and the photosensitive unit of the image sensor and the photosensitive unit of the photoelectric sensor are configured to sense light in an imaging area of an identical lens. According to the embodiments of the present disclosure, a volume of a module can be reduced without affecting original functions of the sensors, thereby reducing complexity for designing a structure and an optical path and manufacturing costs.

## Description

### TECHNICAL FIELD

The present disclosure relates to optical technologies, and in particular, to an optical sensing device and a terminal.

### BACKGROUND

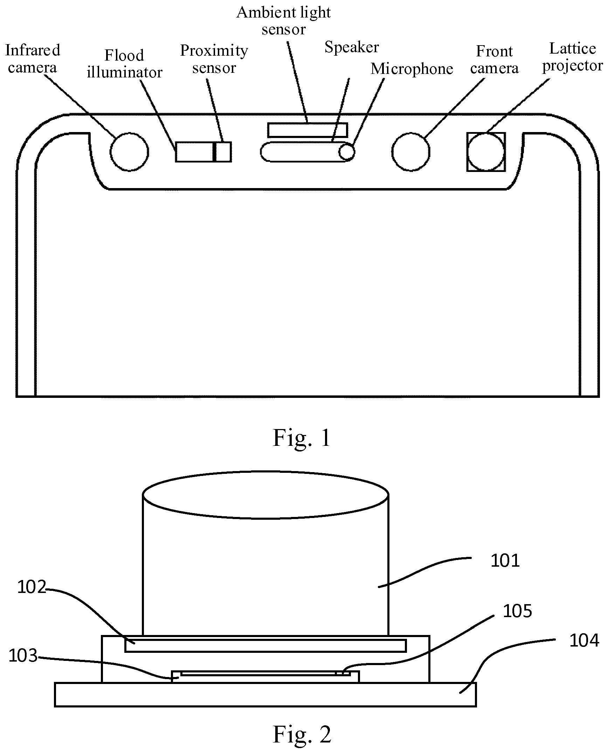

With a launch of the iPhone X, 3D face recognition technology represented by the Face ID has become a hot spot. More and more sensors are disposed at the top of a mobile phone, as shown in Fig. 1. Besides a large 3D face recognition module (including an infrared camera, a structured light projection module, and a flood lighting module), an RGB front camera, an ambient light sensor, a proximity sensor, a speaker, a noise reduction microphone and the like are also included.

The inventor found that at least the following problems exist in existing technologies: driven by a trend of a full-screen design, a screen-to-body ratio of mobile phones is getting higher and higher, and a space left for sensors is getting smaller and smaller, resulting in increased design difficulty and manufacturing costs. A solution for the speaker is to use a piezoelectric ceramic speaker that may be disposed below the screen, and a microphone may be disposed at the top of the mobile phone. Although a problem of light reaching the ambient light sensor and the proximity sensor may be resolved by opening a hole below an organic light-emitting diode (OLED) screen, accuracy of the sensors is then significantly reduced, and a screen color at an opening position may be different, affecting a display effect. In addition, due to low light transmittance of a liquid crystal display (LCD) screen, light reaching the sensors below the display screen cannot be achieved.

### SUMMARY

An objective of some embodiments of the present disclosure is to provide an optical sensing device, to reduce a volume of a module without affecting original functions of sensors, thereby reducing complexity for designing a structure and an optical path and manufacturing costs.

An embodiment of the present disclosure provides an optical sensing device, which includes a photoelectric sensor and an image sensor. The photoelectric sensor is configured to convert an optical signal obtained by a photosensitive unit of the photoelectric sensor into an electrical signal. The image sensor is configured to convert an optical signal obtained by a photosensitive unit of the image sensor into image data. The image sensor and the photoelectric sensor are physically integrated, and the photosensitive unit of the image sensor and the photosensitive unit of the photoelectric sensor are configured to sense light in an imaging area of an identical lens.

An embodiment of the present disclosure further provides a terminal, which includes the optical sensing device, and a lens. The lens is configured to receive light and form an imaging area. The photosensitive unit of the image sensor and the photosensitive unit of the photoelectric sensor in the optical sensing device are configured to sense light in the imaging area of the identical lens.

Compared with existing technologies, the optical sensing device in the present disclosure includes an image sensor and a photoelectric sensor. A physical integration between the image sensor and the photoelectric sensor helps reduce a volume of the optical sensing device, thereby increasing a screen-to-body ratio when the optical sensing device is applied to a full-screen structure. The photosensitive unit of the image sensor and the photosensitive unit of the photoelectric sensor are configured to sense light in an imaging area of the identical lens, that is, the photosensitive unit of the image sensor and the photosensitive unit of the photoelectric sensor are located in the imaging area of the identical lens, so that the image sensor and the photoelectric sensor can share the lens and reuse the optical path and the structure of the lens without a need to provide a new lens for the photoelectric sensor, thereby reducing the complexity for designing the structure and the optical path, and the manufacturing costs. The photoelectric sensor converts an optical signal obtained by the photosensitive unit of the photoelectric sensor into an electrical signal, and the image sensor converts an optical signal obtained by the photosensitive unit of the image sensor into image data, to enable the image sensor and the photoelectric sensor that are integrated to implement respective functions well, thereby avoiding a disadvantage caused by opening a hole below the screen to increase the screen-to-body ratio in the existing technologies.

In one example, the image sensor is an infrared image sensor, which provides an implementation of the image sensor.

In one example, the image sensor is an RGB image sensor, which provides an implementation of the image sensor, so that embodiments of the present disclosure can be implemented in a flexible and diverse manner.

In one example, the photoelectric sensor is a proximity sensor, which provides an implementation of the photoelectric sensor that helps detect a distance.

In one example, the photoelectric sensor is an ambient light sensor, which provides an implementation of the photoelectric sensor that helps detect ambient light.

In one example, the optical sensing device further includes a light source physically integrated with the image sensor and the photoelectric sensor. The light source is configured to emit light with a predetermined wavelength or a predetermined wavelength range, and the proximity sensor is configured to receive light reflected back by an object after the light is emitted. The light source physically integrated with the image sensor and the photoelectric sensor helps further reduce the volume of the optical sensing device. The light source is configured to emit light, so that the emitted light can enter the lens and irradiate on the photoelectric sensor after being reflected by an object, to provide a calculation basis for obtaining a distance between the object and the photoelectric sensor.

In one example, the proximity sensor and the image sensor are integrated at a wafer level, and the light source is integrated at a package level, which provides an integrated manner of the image sensor, the proximity sensor and the light source.

In one example, the proximity sensor and the image sensor are integrated at a wafer level, and the light source is integrated at a circuit board level, which provides another integrated manner of the image sensor, the proximity sensor and the light source, so that the present disclosure can be implemented in a flexible and diverse manner.

In one example, the proximity sensor, the image sensor and the light source are all integrated at a package level, so that the present disclosure can be implemented in a more flexible and diverse manner.

In one example, the photoelectric sensor and the image sensor are integrated at a wafer level, which provides an integrated manner of the photoelectric sensor and the image sensor. The photosensitive unit of the image sensor and the photosensitive unit of the photoelectric sensor are the same photosensitive unit that is time-division multiplexed, so that the function of the image sensor and the function of the photoelectric sensor can be implemented by using the same photosensitive unit, thereby reducing the complexity and the costs for designing the device.

In one example, the photoelectric sensor and the image sensor are integrated at a package level, which provides an integrated manner of the photoelectric sensor and the image sensor, so that an integrated process can be implemented in a simpler and easier manner.

In one example, the photoelectric sensor and the image sensor are integrated at a circuit board level, which provides an integrated manner of the photoelectric sensor and the image sensor, so that the present disclosure can be implemented in a flexible and diverse manner.

### BRIEF DESCRIPTION OF THE DRAWINGS

One or more embodiments will be illustrated with figures in corresponding accompanying drawings, and these illustrative descriptions do not constitute limitations to the embodiments. Elements with the same reference numerals in the accompanying drawings represent similar elements. The figures in the accompanying drawings are not limited in proportions, unless stated otherwise.
Fig. 1 is a schematic diagram of sensors at the top of a mobile phone according to the background of the present disclosure;
Fig. 2 is a schematic structural diagram of an optical sensing device according to a first embodiment of the present disclosure;
Fig. 3 is a top view of an imaging area of a lens according to the first embodiment of the present disclosure;
Fig. 4 is a sectional view of an imaging area of a lens according to the first embodiment of the present disclosure;
Fig. 5 is a schematic structural diagram of implementing distance detection according to the first embodiment of the present disclosure;
Fig. 6 is a top view in which a photoelectric sensor and an image sensor are integrated at a wafer level and a light source is integrated at a package level according to the first embodiment of the present disclosure;
Fig. 7 is a sectional view in which a photoelectric sensor and an image sensor are integrated at a wafer level and a light source is integrated at a package level according to the first embodiment of the present disclosure;
Fig. 8 is a top view of a position of a light source on a die according to the first embodiment of the present disclosure;
Fig. 9 is a sectional view in which both a light source and a die are mounted on a substrate according to the first embodiment of the present disclosure;
Fig. 10 is a top view in which a photoelectric sensor and an image sensor are integrated at a wafer level and a light source is integrated at a circuit board level according to the first embodiment of the present disclosure;
Fig. 11 is a sectional view in which a photoelectric sensor and an image sensor are integrated at a wafer level and a light source is integrated at a circuit board level according to the first embodiment of the present disclosure;
Fig. 12 is a top view in which a photoelectric sensor, an image sensor and a light source are all integrated at a package level according to the first embodiment of the present disclosure;
Fig. 13 is a sectional view in which a photoelectric sensor, an image sensor and a light source are all integrated at a package level according to the first embodiment of the present disclosure;
Fig. 14 is a top view in which a photoelectric sensor, an image sensor and a light source are electrically connected to lines of a substrate by using bonding wires when a photoelectric sensor, an image sensor and a light source are all integrated at a package level according to the first embodiment of the present disclosure;
Fig. 15 is a sectional view in which a photoelectric sensor, an image sensor and a light source are electrically connected to lines of a substrate by using bonding wires when a photoelectric sensor, an image sensor and a light source are all integrated at a package level according to the first embodiment of the present disclosure;
Fig. 16 is a top view in which a photoelectric sensor, an image sensor and a light source are all integrated at a circuit board level according to the first embodiment of the present disclosure;
Fig. 17 is a sectional view in which a photoelectric sensor, an image sensor and a light source are all integrated at a circuit board level according to the first embodiment of the present disclosure;
Fig. 18 is a top view in which a photoelectric sensor and an image sensor are integrated at a package level and a light source is integrated at a circuit board level according to the first embodiment of the present disclosure;
Fig. 19 is a sectional view in which a photoelectric sensor and an image sensor are integrated at a package level and a light source is integrated at a circuit board level according to the first embodiment of the present disclosure;
Fig. 20 is a schematic structural diagram of implementing ambient light detection according to a second embodiment of the present disclosure;
Fig. 21 is a top view in which a photoelectric sensor and an image sensor are integrated at a wafer level and reuse a photosensitive unit according to the second embodiment of the present disclosure;
Fig. 22 is a sectional view in which a photoelectric sensor and an image sensor are integrated at a wafer level and reuse a photosensitive unit according to the second embodiment of the present disclosure;
Fig. 23 a top view in which a photoelectric sensor and an image sensor are integrated at a wafer level and don't reuse a photosensitive unit according to the second embodiment of the present disclosure;
Fig. 24 is a sectional view in which a photoelectric sensor and an image sensor are integrated at a wafer level and don't reuse a photosensitive unit according to the second embodiment of the present disclosure;
Fig. 25 is a top view in which a photoelectric sensor being and an image sensor are integrated at a package level according to the second embodiment of the present disclosure;
Fig. 26 is a sectional view in which a photoelectric sensor and an image sensor are integrated at a package level according to the second embodiment of the present disclosure;
Fig. 27 is a top view in which a photoelectric sensor and an image sensor are integrated at a circuit board level according to the second embodiment of the present disclosure;
Fig. 28 a sectional view in which a photoelectric sensor and an image sensor are integrated at a circuit board level according to the second embodiment of the present disclosure;
Fig. 29 is a top view in which a photoelectric sensor and an image sensor are integrated at a structure level according to the second embodiment of the present disclosure;
Fig. 30 is a sectional view in which a photoelectric sensor and an image sensor are integrated at a structure level according to the second embodiment of the present disclosure; and
Fig. 31 is a schematic structural diagram of a terminal according to a third embodiment of the present disclosure.

### DETAILED DESCRIPTION

To make objectives, technical solutions, and advantages of the present disclosure clearer, the following further describes some embodiments of the present disclosure in detail with reference to accompanying drawings and the embodiments. It should be understood that the specific embodiments described herein are merely used to explain the present disclosure, and are not intend to limit the present disclosure.

A first embodiment of the present disclosure relates to an optical sensing device, which includes a photoelectric sensor and an image sensor. The photoelectric sensor is configured to convert an optical signal obtained by a photosensitive unit of the photoelectric sensor into an electrical signal. The image sensor is configured to convert an optical signal obtained by a photosensitive unit of the image sensor into image data. The image sensor and the photoelectric sensor are physically integrated, and the photosensitive unit of the image sensor and the photosensitive unit of the photoelectric sensor are configured to sense light in an imaging area of the identical lens, so that a volume of a module can be reduced, thereby reducing complexity for designing a structure and an optical path and manufacturing costs.

The optical sensing device in this embodiment may be applied to the following products: (1). mobile terminals such as a mobile phone and equipment and devices such as a laptop and a smart door lock; (2). equipment and devices such as a 3D scanner that has a 3D scanning function or a reverse modeling function; (3). augmented reality (AR), virtual reality (VR), mix reality (MR), somatosensory game or in-vehicle equipment and devices that have gesture recognition or pose detection; and (4). industrial cameras or devices that are needed to capture or identify a three-dimensional object, or the like. Other examples are not listed herein.

The photoelectric sensor of the optical sensing device in this embodiment may be a photodiode, a phototransistor, a photosensitive pixel of a complementary metal oxide semiconductor (CMOS) image sensor, a photosensitive pixel of a charge coupled device (CCD) image sensor, a sensor of an integrated photosensitive unit, a sensor of a signal conditioning circuit which outputs an analog signal, a sensor of an analog-to-digital converter, and a sensor of a digital output interface (such as a serial or parallel interface such as
inter-integrated circuit (I2C), serial peripheral interface (SPI), improved inter-integrated circuit (I3C), and universal asynchronous receiver/transmitter (UART)). There may be one or more photoelectric sensors or an array of photoelectric sensors.

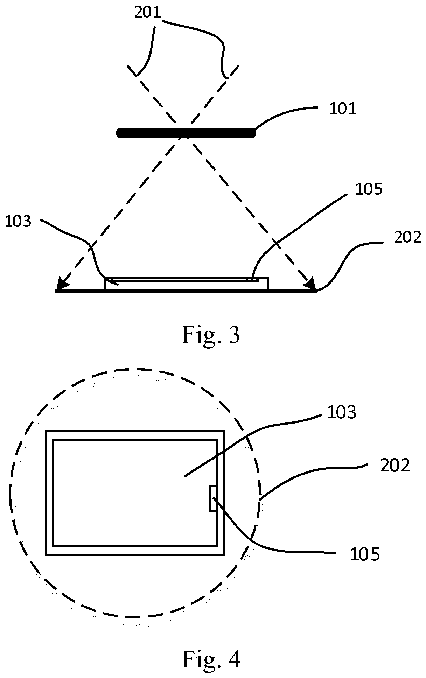

Specifically, a schematic structural diagram of the optical sensing device is shown in Fig. 2. The optical sensing device includes: a lens 101, a filter 102, an image sensor 103, a circuit board 104 and a photoelectric sensor 105. The lens 101 is configured to receive light to form an imaging area. Both the photosensitive unit of the image sensor 103 and the photosensitive unit of the photoelectric sensor 105 are located in the imaging area of an identical lens or lens set. The photosensitive unit may sense light with a plurality of wavelengths, for example, laser, white light, infrared light or the like. As shown in Fig. 3 and Fig. 4, the photoelectric sensor 105 is disposed in a largest image circle 202 formed by main light 201 that passes through the lens 101. When the main light 201 passes through the lens 101, an entire area of the largest image circle 202 may be irradiated, so that the photoelectric sensor 105 may receive light originating outside the lens. The image sensor 103 may also receive light originating outside the lens, and convert the optical signal obtained by the photosensitive unit into image data.

It should be noted that this embodiment only exemplifies the lens in the optical sensing device, but in an actual application, the optical sensing device may include no lens, and the lens may be a lens in the terminal.

It should be noted that the image sensor in this embodiment may be an infrared image sensor, the photoelectric sensor is a proximity sensor. The proximity sensor is needed to be used with the light source. The light source may be a light-emitting diode or laser such as a light emitting diode (LED), a laser diode (LD), a vertical cavity surface emitting laser (VCSEL), or an edge emitting laser (EEL). There may be one or more light sources or an array of light sources. The filter 102 may be a natural light filter, which is configured to filter out natural light in received light, so that the light received by the photoelectric sensor 105 is infrared light, to complete calculating a distance.

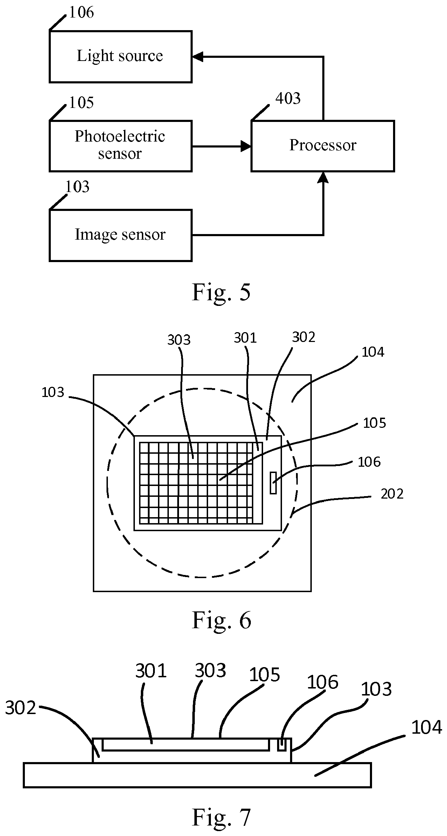

Further, as shown in Fig. 5, the processor 403 controls the light source 106 to emit modulated light, and the light enters the lens 101 and irradiates on the photoelectric sensor 105 after being reflected by an object A. The photoelectric sensor 105 converts the optical signal obtained by the photosensitive unit into the electrical signal, and transmits the electrical signal to the processor 403, so that the processor 403 may obtain the distance between the optical sensing device and the object A through algorithmic processing. In different application scenarios, the processor 403 may control different peripheral devices to respond accordingly. For example, in a case that the optical sensing device in this embodiment is disposed in a mobile phone, a screen is automatically turned off if the phone is close enough to a face when a phone call is made, or when a structural light 3D face recognition is performed, a lattice projector is controlled to emit a spot after the face is detected in an appropriate distance range, otherwise the lattice projector is not started. In an actual application, the image sensor 103 receives image data and sends the image data to the processor 403, and the processor 403 performs further processing based on the received image data.

A physical integration among the image sensor 103, the photoelectric sensor 105 and the light source 106 in this embodiment may be implemented by the following solutions.

In a first solution: as shown in Fig. 6 and Fig. 7, the photoelectric sensor 105 and the image sensor 103 are integrated at a wafer level, and the light source 106 is integrated at a package level. In other words, the proximity sensor 105 and the image sensor 103 are integrated on the same wafer, that is, the proximity sensor 105 and the image sensor 103 are integrated on the same die 301, and the photoelectric sensor 105 and the image sensor 103 that are integrated on the same wafer are packaged with the light source 106.

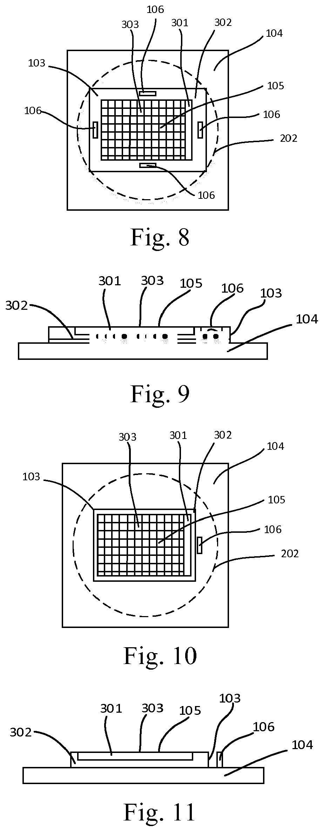

Specifically, the integration between the photoelectric sensor 105 and the image sensor 103 indicates that the photosensitive unit 303 of the photoelectric sensor 105 and the photosensitive unit 303 of the image sensor 103 are time-division multiplexed, that is, the photosensitive unit 303 of the image sensor 103 may be used to image, and may be further used as a photosensitive part of the proximity sensor, but the two are not used at the same time. A signal conditioning circuit used with the photosensitive unit 303 for distance detection and imaging is disposed at other positions on the wafer that do not affect the photosensitive unit 303 to receive light. The light source 106 and the die 301 are integrated at a package level indicates that the light source 106 and the die 301 are mounted on the same substrate, and a packaging material is configured to wrap the light source 106 ad the die 301 for protection. As shown in Fig. 8, the light source 106 may be at any position around the die 301 such as at the top, at the bottom, at the left or at the right of the die 301. The manners in which the light source 106 and the die 301 mounted on the substrate include, but are not limit to, packaging or soldering processes such as reflow soldering, wire bonding used for semiconductor, silver paste as shown in Fig. 9.

In a second solution: as shown in Fig. 10 and Fig. 11, the photoelectric sensor 105 and the image sensor 103 are integrated at a wafer level, and the light source 106 is integrated at a circuit board level. In other words, the photoelectric sensor 105 and the image sensor 103 are integrated on a same wafer and are packaged, and are mounted with the light source 106 on the circuit board 104, such as a printed circuit board (PCB) or a flexible printed circuit (FPC).

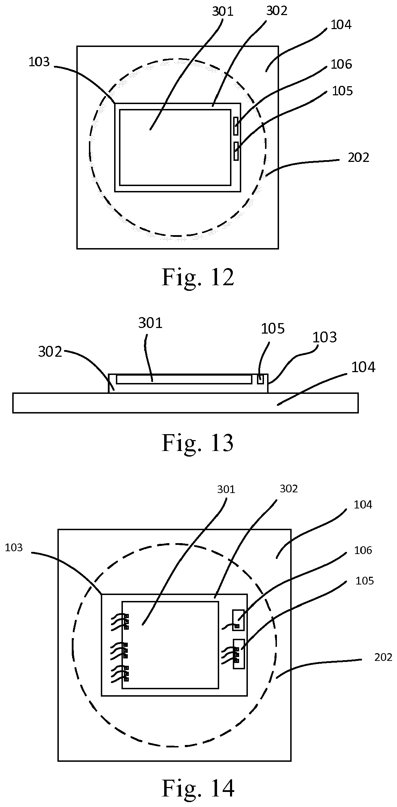

In a third solution: as shown in Fig. 12 and Fig. 13, the photoelectric sensor 105, the image sensor 103 and the light source 106 are all integrated at a package level. In an actual application, each of the two sensors may be one die, and the light source may be a die or alternatively a packaging chip. The integration at a package level is described in detail as follows.

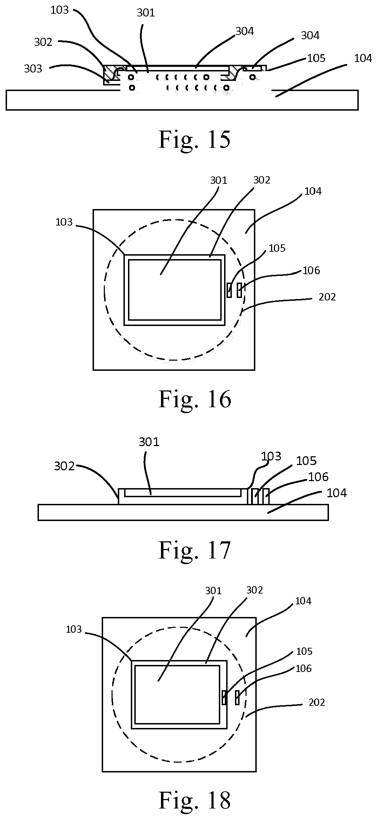

In a first manner: the image sensor 103, the photoelectric sensor 105 and the light source 106 are all in forms of dies. Referring to Fig. 14 and Fig. 15, the image sensor 103, the photoelectric sensor 105 and the light source 106 are pasted on a substrate 303 with silver paste or other commonly used materials, and the three dies are electrically connected to lines of the substrate by using bonding wires used for semiconductor, or other methods of electrical connections at a wafer level or at a package level such as a through-silicon via (TSV) technology or the like . A quantity of bonding wires as shown in Fig. 14 is merely exemplary, and an actual quantity is not limited thereto. A packaging material 302 are configured to wrap the dies and the bonding wires and protect the dies and the bonding wires from external damage or corrosion. The packaging material 302 may be an electrical packaging material epoxy molding compound (EMC) or the like. Special handling on the top of the image sensor 103, the photoelectric sensor 105 and the light source 106 are required, to ensure that light transmittance of the packaging material on the top is greater than 80%. Specifically, the packaging material on the top may be hollowed out, or a light-transmitting material with light transmittance of more than 80% is used for packaging, or the packaging material on the top is ground to be photosensitive or until a light-emitting area is exposed.

In a second manner: the image sensor 103 and the photoelectric sensor 105 are both in forms of dies, and the light source 106 is a packaged product, for example, the light source 106 may be an LED with a package size of 0402. Referring to Fig. 14 and Fig. 15, the image sensor 103 and the photoelectric sensor 105 are electrically connected to the lines of the substrate by using bonding wires, or other methods of electrical connections at a wafer level or at a package level such as a TSV technology or the like. The light source 106 is electrically connected to the substrate 303 by using reflow soldering, or other processes such as the surface mounting technology (SMT). The packaging material 302 are configured to wrap the dies and the bonding wires and protect the dies and the bonding wires from external damage or corrosion. The packaging material 302 may be an EMC or the like. Special handling on the top of the image sensor 103, the photoelectric sensor 105 and the light source 106 that are similar to the first manner above are required, and detailed are not described herein again.

In a fourth solution: as shown in Fig. 16 and Fig. 17, the photoelectric sensor 105, the image sensor 103 and the light source 106 are all integrated at a circuit board level. In other words, each of the photoelectric sensor 105, the image sensor 103 and the light source 106 may be one independent chip and the three dies are packaged respectively, and are mounted together on the circuit board 104.

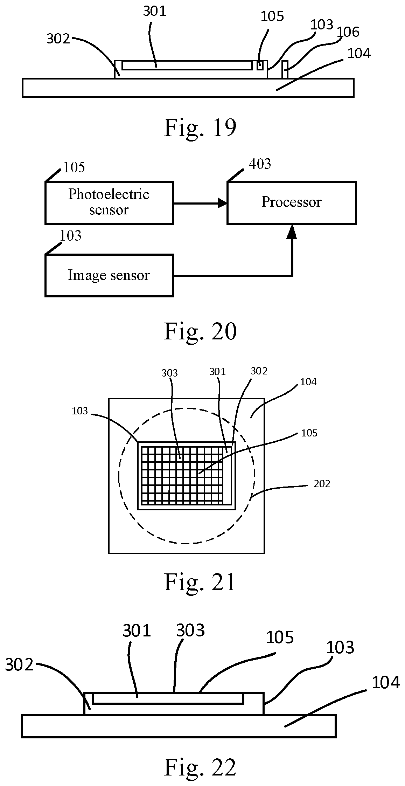

In a fifth solution: as shown in Fig. 18 and Fig. 19, the photoelectric sensor 105 and the image sensor 103 are integrated at a package level, and the light source 106 is integrated at a circuit board level. For example, the image sensor 103 and the photoelectric sensor 105 are pasted on the substrate by using silver paste or other commonly used materials, the substrate is mounted on the circuit board 104, and the light source 106 is also mounted on the circuit board.

It should be noted that this embodiment merely exemplifies the five integration solutions above, and this is not limited thereto in an actual application.

Compared with existing technologies, this embodiment has technical effects as follows: (1). the integration between the proximity sensor and the image sensor helps reduce the volume of the module, and better implements functions of the proximity sensor and the image sensor; (2). the integrated module may reuse an optical path and a structure of the image sensor, so as to reduce the complexity for designing the structure and the optical path; (3). the module reuses the optical path and the structure may significantly reduce the costs; (4). various optional integrated manners are provided, so that the present disclosure may be implemented in a more flexible and diverse manner.

A second embodiment of the present disclosure relates to an optical sensing device. This embodiment is substantially the same with the first embodiment, and a difference is as follows. In the first embodiment, the photoelectric sensor is a proximity sensor, and the proximity sensor is needed to be used with the light source, so in the first embodiment, the proximity sensor, the image sensor and the light source are physically integrated. In this embodiment, however, the photoelectric sensor is an ambient light sensor, and the ambient light sensor is not needed to be used with the light source. Therefore, a physical integration between the ambient light sensor and the image sensor helps reduce a volume of a module, and also implement functions of the image sensor and the ambient light sensor.

Specifically, a schematic structural diagram of the optical sensing device in this embodiment is shown in Fig. 2. The image sensor in this embodiment may be an RGB image sensor, and the photoelectric sensor 105 is an ambient light sensor. As ambient light changes, an output signal of the ambient light sensor changes accordingly. The filter 102 in this embodiment is an infrared filter, which is configured to filter out infrared light in received light, so that light received by the ambient light sensor is natural light, so as to complete detecting the ambient light. It should be noted that the infrared filter in this embodiment is disposed in a lens, and the lens is disposed in the optical sensing device. In an actual application, however, the lens may alternatively be a lens disposed in the terminal, and this embodiment is not limited thereto.

Further, as shown in Fig. 20, the photoelectric sensor 105 converts an optical signal obtained by a photosensitive unit into an electrical signal, and the converted electrical signal is an electrical signal which may indicate light intensity. The photoelectric sensor 105 transmits the electrical signal to a processor 403, and the processor 403 processes the electrical signal and may analyze the intensity or a color temperature of the current ambient light, to further control brightness of a display screen or other display effects. In an actual application, the image sensor 103 obtains image data and sends the image data to the processor 403, and the processor 403 performs further processing based on the received image data.

It should be noted that in this embodiment, the image sensor 103 and the photoelectric sensor 105 are physically integrated, and specific integration solutions are as follows.

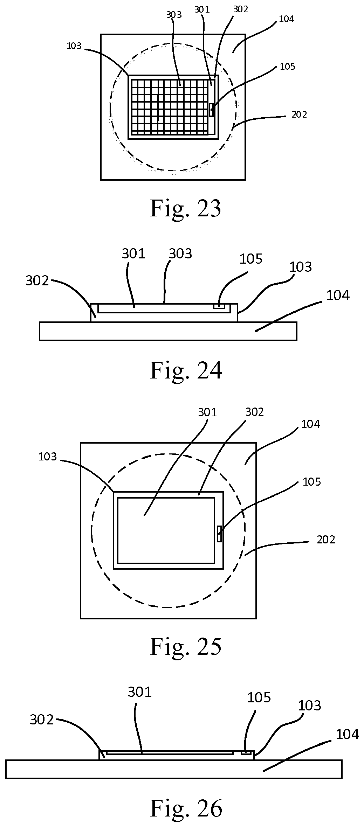

In a first solution: the photoelectric sensor 105 and the image sensor 103 are integrated at a wafer level. In other words, the photoelectric sensor 105 and the image sensor 103 are integrated on the same wafer, that is, the photoelectric sensor 105 and the image sensor 103 are integrated on the same die 301. Two integrated manners at a wafer level are as follows. In a first manner: as shown in Fig. 21 and Fig. 22, the photoelectric sensor 105 and the image sensor 103 are on the same die 301, and the photosensitive unit of the photoelectric sensor 105 is one of a plurality of photosensitive units 303 of the image sensor 103, that is, at least one of the photosensitive units of the image sensor 103 is reused as the photosensitive unit of the photoelectric sensor 105. The photosensitive unit of the photoelectric sensor 105 may be one or more of the photosensitive units 303 of the image sensor 103, or even reuse all of photosensitive units. In a second manner: as shown in Fig. 23 and Fig. 24, the photosensitive unit of the photoelectric sensor 105 and the image sensor 103 are on the same die 301, and the photosensitive unit of the photoelectric sensor 105 and the photosensitive unit of the image sensor 103 are independent from each other, and are not reused. For example, the two sensors are manufactured during the same lithography process, a plurality of single chips are formed by slicing, and each of the plurality of single chips includes the two sensors.

In a second solution: as shown in Fig. 25 and Fig. 26, the photoelectric sensor 105 and the image sensor 103 are integrated at a package level, that is, each of the two sensors may be one die and the two dies are packaged together. The integration at a package level is described in detail in the first embodiment, and a similar manner in which the photoelectric sensor 105 and the image sensor 103 are integrated at a package level can be used in this solution. Details are not described herein again to avoid repetition.

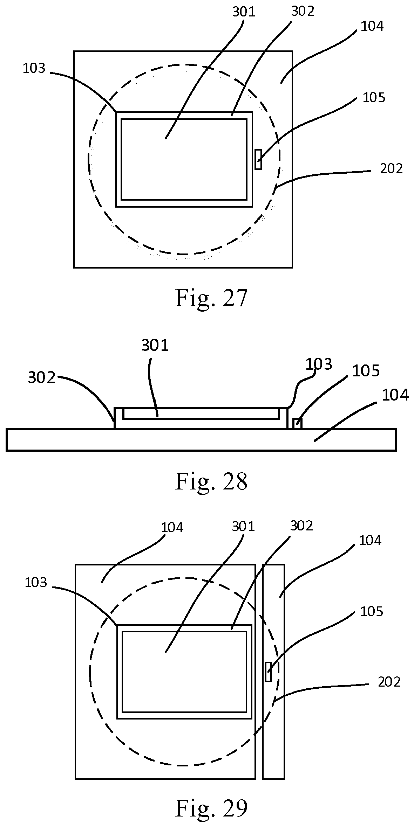

In a third solution: as shown in Fig. 27 and Fig. 28, the photoelectric sensor 105 and the image sensor 103 are integrated at a circuit board level, that is, each of the two sensors may be one chip, and the two chips are packaged respectively, and are mounted on the same circuit board, such as a printed circuit board (PCB) or a flexible printed circuit (FPC).

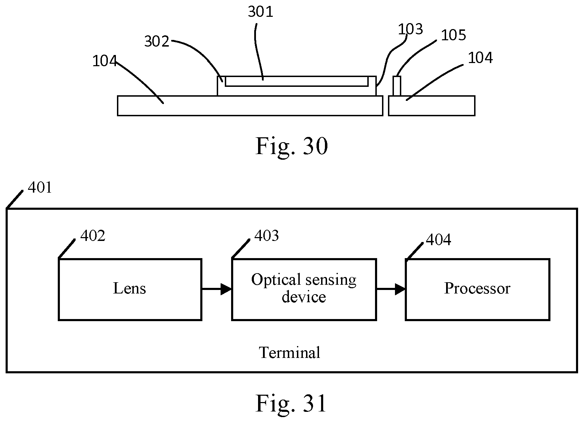

In a fourth solution: as shown in Fig. 29 and Fig. 30, the photoelectric sensor 105 and the image sensor 103 are integrated at a structure level, that is, the photoelectric sensor and the image sensor are fixed only by a structure, reuse an optical path and a structure and are not connected at a circuit level . For example, the two sensors are respectively mounted on different circuit boards, and combined with each other by using some structural designs.

It should be noted that this embodiment merely exemplifies the four integration solutions above, and this is not limited thereto in an actual application.

Compared with existing technologies, the ambient light sensor and the image sensor in this embodiment are integrated, and reuse the optical path and the structure of the image sensor, to implement the integration between the ambient light sensor and the image sensor, so that respective functions of the two sensors are not affected, a problem of complex structural design caused by small space is resolved, and the costs are significantly reduced at the same time.

A third embodiment of the present disclosure relates to a terminal 401, and as shown in Fig. 31, the terminal 401 includes a lens 402, the optical sensing device 403 according to any one of the above embodiments and a processor 404.

In one example, a photoelectric sensor in the optical sensing device 403 is an ambient light sensor, and an infrared filter configured to filter out infrared light in received light is disposed in the lens 402, to ensure the ambient light sensor may receive pure ambient light, and further to analyze intensity of ambient light accurately. Specifically, the ambient light sensor converts an optical signal obtained by a photosensitive unit into an electrical signal, and the converted electrical signal is an electrical signal which may indicate the intensity. The photoelectric sensor transmits the electrical signal to the processor 404, and the processor 404 analyzes the current ambient light based on the electrical signal sent by the ambient light sensor. For example, the terminal 401 is a mobile phone, and the mobile phone analyzes the intensity and color temperature of the current ambient light, to further control brightness of a display screen or other display effects.

In another example, the photoelectric sensor in the optical sensing device 403 is a proximity sensor, and a natural light filter configured to filter out natural light in the received light is disposed in the lens 402, to ensure that the proximity sensor may receive pure infrared light, and further to calculate a distance between the terminal and a to-be-measured object accurately. Specifically, the proximity sensor converts the optical signal obtained by the photosensitive unit into the electrical signal, and sends the electrical signal to the processor 404. The processor 404 calculates the distance between the terminal 401 and the to-be-measured object based on the electrical signal sent by the proximity sensor, so as to control different peripheral devices to respond accordingly in different application scenarios. For example, in a case the terminal 401 is a mobile phone, a screen is automatically turned off if the phone is close enough to a face when a phone call is made, or when a structural light 3D face recognition is performed, a lattice projector is controlled to emit a spot after the face is detected in an appropriate distance range, otherwise the lattice projector is not started.

A person of ordinary skill in the art can understand that the above embodiments are specific examples to implement the present disclosure, and in actual applications, various modifications can be made to forms and details of the present disclosure without departing from the spirit and scope of the present disclosure.

## Claims

1. An optical sensing device, comprising:
a photoelectric sensor, configured to convert an optical signal obtained by a photosensitive unit of the photoelectric sensor into an electrical signal; and
an image sensor, configured to convert an optical signal obtained by a photosensitive unit of the image sensor into image data;
wherein the image sensor and the photoelectric sensor are physically integrated, and the photosensitive unit of the image sensor and the photosensitive unit of the photoelectric sensor are configured to sense light in an imaging area of an identical lens.

2. The optical sensing device according to claim 1, wherein the image sensor is an infrared image sensor.

3. The optical sensing device according to claim 2, wherein the photoelectric sensor is a proximity sensor.

4. The optical sensing device according to claim 3, further comprising: a light source physically integrated with the image sensor and the photoelectric sensor;
wherein the light source is configured to emit light with a predetermined wavelength or a predetermined wavelength range, and the proximity sensor is configured to receive light reflected back by an object after the light is emitted.

5. The optical sensing device according to claim 4, wherein the proximity sensor and the image sensor are integrated at a wafer level, and the light source is integrated at a package level.

6. The optical sensing device according to claim 4, wherein the proximity sensor and the image sensor are integrated at a wafer level, and the light source is integrated at a circuit board level.

7. The optical sensing device according to claim 4, wherein the proximity sensor, the image sensor and the light source are all integrated at a package level.

8. The optical sensing device according to claim 4, wherein the proximity sensor, the image sensor and the light source are all integrated at a circuit board level.

9. The optical sensing device according to claim 4, wherein the proximity sensor and the image sensor are integrated at a package level, and the light source is integrated at a circuit board level.

10. The optical sensing device according to claim 1, wherein the image sensor is an RGB image sensor.

11. The optical sensing device according to claim 10, wherein the photoelectric sensor is an ambient light sensor.

12. The optical sensing device according to claim 1, wherein the photoelectric sensor and the image sensor are integrated at a wafer level;
wherein the photosensitive unit of the image sensor and the photosensitive unit of the photoelectric sensor are the same photosensitive unit that is time-division multiplexed.

13. The optical sensing device according to claim 1, wherein the photoelectric sensor and the image sensor are integrated at a package level.

14. The optical sensing device according to claim 1, wherein the photoelectric sensor and the image sensor are integrated at a circuit board level.

15. The optical sensing device according to claim 1, wherein the photoelectric sensor and the image sensor are integrated at a structure level.

16. A terminal, comprising the optical sensing device according to any one of claims 1 to 15;
and a lens, configured to receive light and form the imaging area;
wherein the photosensitive unit of the image sensor and the photosensitive unit of the photoelectric sensor in the optical sensing device are configured to sense light in the imaging area.

17. The terminal according to claim 16, further comprising a processor, wherein the photoelectric sensor in the optical sensing device is an ambient light sensor; and
the processor is configured to receive an electrical signal sent by the ambient light sensor, and analyze current ambient light based on the electrical signal sent by the ambient light sensor.

18. The terminal according to claim 17, wherein an infrared filter configured to filter out infrared light in the received light is disposed in the lens.

19. The terminal according to claim 16, further comprising a processor, wherein the photoelectric sensor in the optical sensing device is a proximity sensor; and
the processor is configured to receive an electrical signal sent by the proximity sensor, and calculate a distance between the terminal and a to-be-measured object based on the electrical signal sent by the proximity sensor.

20. The terminal according to claim 19, wherein a natural light filter configured to filter out natural light in the received light is disposed in the lens.
